# EUROPEAN PATENT SPECIFICATION

(11) **EP 3 333 460 B1**
(45) Date of publication and mention of the grant of the patent: **10.07.2019**
(21) Application number: 17200081.2
(22) Date of filing: 06.11.2017
(51) Int. Cl.: F16H 57/04, F16D 41/07, F16H 57/02

(54) **OIL DISCHARGE STRUCTURE OF ROTATIONAL BODY**
ÖLABLASSSTRUKTUR EINES ROTATIONSKÖRPERS
STRUCTURE D'ÉVACUATION D'HUILE DE CORPS ROTATIF

(30) Priority: 08.12.2016 JP 2016238532
(43) Date of publication of application: 13.06.2018
(73) Proprietor: HONDA MOTOR CO., LTD., Tokyo 107-8556 (JP)
(72) Inventor: HAYAKAWA, Takashi, Wako-shi, Saitama 351-0193 (JP); KOMURO, Hirokazu, Wako-shi, Saitama 351-0193 (JP); SUZUKI, Hitoshi, Wako-shi, Saitama 351-0193 (JP); ENOMOTO, Tsukasa, Wako-shi, Saitama 351-0193 (JP); HIRAYAMA, Shuji, Wako-shi, Saitama 351-0193 (JP)
(74) Representative: Weickmann & Weickmann PartmbB

(56) References cited:
- EP-A1- 3 184 414
- US-A1- 2002 148 697

## Description

### [TECHNICAL FIELD]

The present invention relates to an oil discharge structure of a rotational body.

### [BACKGROUND ART]

JP 2002-310200 A discloses a one-way clutch assembly. The one-way clutch assembly includes a side plate that covers an outer ring (rotational body) from a side. A circular hole is bored in the side plate. Lubricating oil (oil) supplied to a claw (ratchet) and a spring is discharged to an outside through the hole.

EP 3 184 414 A1 published between priority and filing date of the present application, discloses a one-way clutch assembly. The one-way clutch assembly includes a side plate that covers an outer ring (rotational body) from a side. A circular hole is bored in the side plate. Lubricating oil supplied to a claw (ratchet) and a spring is discharged to an outside through the hole.

US 2002 148697 on which the preamble of claim 1 is based discloses a one-way clutch assembly comprising a ratchet one-way clutch portion includes inner and outer races which are disposed in coaxial with each other, a pawl capable of being fitted into a recess provided in the inner or outer race to transmit torque, and a biasing member for biasing the pawl to promote the fitting, and a bearing portion disposed between the inner race and the outer race.

### [SUMMARY OF THE INVENTION]

### [PROBLEM TO BE SOLVED BY THE INVENTION]

However, according to such configuration of JP 2002-310200 A, while the outer ring rotates, the oil splattering from the outer ring to the outside in a radial direction splatters toward the outside from the hole. Occurrence of air entrainment is concerned when the oil splatters. The present invention has been achieved in view of the above-mentioned circumstances, and it is an object thereof to provide an oil discharge structure of a rotational body capable of effectively suppressing occurrence of air entrainment.

### [MEANS TO SOLVE THE PROBLEMS]

In order to achieve the object, there is provided an external case according to claim 1. According to the first feature, the external case comprises a gear cover and is equipped with a rotational body and an oil discharge structure therein. A fixing tool is fixed to the external case, the external case storing the rotational body in an inside thereof in a rotatable manner, wherein the fixing tool includes a cutout portion that is formed along a protruding portion of the external case, a first gap is formed between the cutout portion and the protruding portion, and oil flowing out by rotation of the rotational body passes through the cutout portion and the first gap so as to be discharged to the external case side.

According to a second feature, in addition to the first feature, the protruding portion has an arc shape as viewed in an axial direction of the rotational body.

According to a third feature, in addition to the first feature or the second feature, the protruding portion has a surface of a curved shape.

According to a fourth feature, in addition to any one of the first feature to the third feature, the rotational body is configured with an outer ring and an inner ring, the outer ring being rotatable, rotation of the inner ring being restricted, and the fixing tool fixes the inner ring while covering at least a part of the outer ring.

According to a fifth feature, in addition to the fourth feature, a second gap exists between a rotational portion and the inner ring, the rotational portion rotating integrally with the outer ring, and oil supplied from an inner side of the inner ring is discharged through the second gap.

### [EFFECTS OF THE INVENTION]

With the first feature, since the protruding portion is arranged close to the cutout portion, the oil vigorously discharged from the cutout portion is received by the protruding portion and is suppressed from splattering to the periphery. Since splattering is reduced, occurrence of air entrainment is suppressed. Even if the fixing tool comes close to the protruding portion, interference between the fixing tool and the protruding portion is avoided by action of the cutout portion, and therefore the fixing tool is efficiently stored in an internal space of the outer case. Therefore, it can contribute to compactization of the outer case.

With the second feature, since the protruding portion has the arc shape, the protruding portion can receive the oil that has been vigorously discharged in any radial direction.

With the third feature, since the protruding portion has the curved shape, the protruding portion can receive the oil without splattering, the oil having been vigorously discharged.

With the fourth feature, since a part of the rotating outer ring is covered with the fixing tool, the oil can be prevented from splattering.

With the fifth feature, the oil supplied from the inside of the inner ring can be also discharged since the oil passes through the second gap.

### [BRIEF DESCRIPTION OF THE DRAWINGS]

[FIG. 1] It is a left side view of an essential part of a two-wheeled motor vehicle.
[FIG. 2] It is a sectional view taken along the line 2-2 of FIG. 1.
[FIG. 3] It is an enlarged view of an essential part of FIG. 2.
[FIG. 4] It is an enlarged sectional view of a transmission case cut along a section thereof including an axis of a transmission shaft and an axis of an intermediate shaft.
[FIG. 5] It is an enlarged view of a portion shown by the arrow 5 of FIG. 3.
[FIG. 6] It is a sectional view taken along the line 6-6 of FIG. 3 in a state where a gear cover and a fixing tool are omitted.
[FIG. 7] It corresponds to FIG. 6, and is a sectional view in a state where the fixing tool is furnished.
[FIG. 8] It is a sectional view taken along the line 8-8 of FIG. 3 for showing an attached state of the fixing tool.

### [MODES FOR CARRYING OUT THE INVENTION]

Hereinafter, an embodiment of the present invention will be explained referring to the attached drawings. Also, in the explanation below, the front, rear, left, right, upward, and downward are to be directions as viewed by an occupant riding on a two-wheeled motor vehicle (scooter).

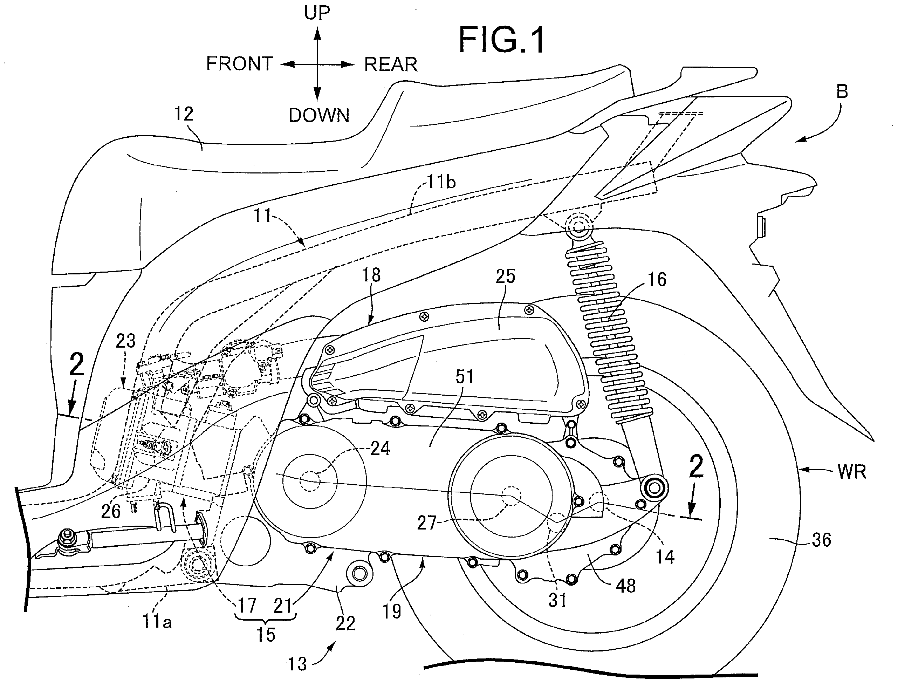

As shown in FIG. 1, a two-wheeled motor vehicle B that is a saddle-ride type vehicle includes a body frame 11. Here, a pivot frame 11a and a rear frame 11b are illustrated, the pivot frame 11a and the rear frame 11b configuring the body frame 11, the rear frame 11b extending upward to the rear from the pivot frame 11a. Above the rear frame 11b, a riding seat 12 is supported by the body frame 11. Below the rear frame 11b, a rear wheel unit 13 is connected to the pivot frame 11a in an up-down swingable manner. The rear wheel unit 13 includes a rear wheel WR and a power unit 15, the rear wheel WR rotating around an axle 14, the axle 14 extending horizontally in a vehicle width direction, the power unit 15 generating power that drives the rear wheel WR. A rear cushion unit 16 is disposed between the rear wheel unit 13 and the rear frame 11b. The rear cushion unit 16 absorbs up-down motion of the rear wheel WR with respect to the rear frame 11b.

The power unit 15 includes a water-cooled engine 17 that is a power source, an intake device 18, and a power transmission device 21, the intake device 18 being connected to the engine 17 and supplying air to the engine 17, the power transmission device 21 being stored in a transmission case (external case) 19 that is fixed to the engine 17. The axle 14 of the rear wheel WR is supported at both ends by of the transmission case 19 and a support arm which will be described below. The power from the engine 17 is transmitted to the rear wheel WR through the power transmission device 21. The engine 17 includes an engine body 23 and a crankshaft 24, the engine body 23 including a crankcase 22, the crankshaft 24 being rotatably supported by the crankcase 22 and having an axis along the vehicle width direction. The intake device 18 includes an air cleaner 25 that is joined to an upper part of the transmission case 19. The air cleaner 25 is connected to a cylinder head 26 of the engine body 23, and has a function of removing dust from the air that is supplied to a combustion chamber of the engine body 23.

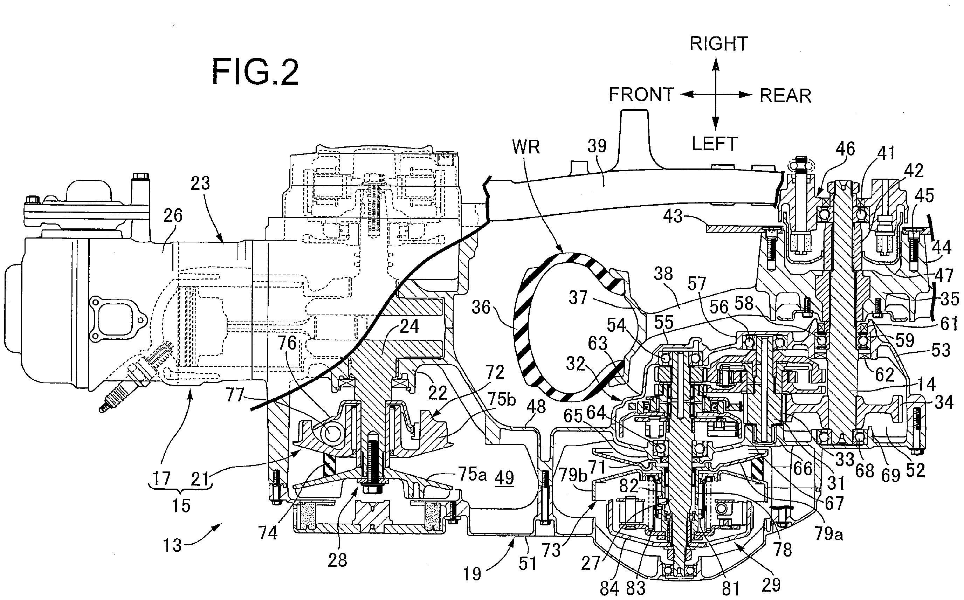

As shown in FIG. 2, the power transmission device 21 includes a belt-type continuously variable transmission 28, a centrifugal type startup clutch 29, and a mechanical transmission 32, the belt-type continuously variable transmission 28 transmitting rotational power of the crankshaft 24 to a transmission shaft 27 while changing the rotational speed of the crankshaft 24 in a continuously variable manner, the startup clutch 29 being interposed between the transmission shaft 27 and the belt-type continuously variable transmission 28, the mechanical transmission 32 being arranged between the transmission shaft 27 and the axle 14 of the rear wheel WR, transmitting the rotational power from the transmission shaft 27 to an intermediate shaft 31 while switching the gear shift stage between a high-speed stage and a low-speed stage, and transmitting the rotational power from the intermediate shaft 31 to the axle 14 while reducing the speed. The transmission shaft 27, the intermediate shaft 31, and the axle 14 have axes that are parallel to each other. An output gear 33 is cut in the intermediate shaft 31. The output gear 33 meshes with a driven gear 34 that is fixed to the axle 14.

The rear wheel WR includes a wheel hub 35, a wheel rim 37, and a connecting portion 38, the wheel hub 35 being supported by the axle 14 in a relatively non-rotatable manner, the wheel rim 37 being coaxially disposed to the wheel hub 35 and retaining a tire 36 in a coaxial manner with the wheel hub 35, the connecting portion 38 connecting the wheel hub 35 and the wheel rim 37 with each other. The mechanical transmission 32 is disposed in a space between the connecting portion 38 and the belt-type continuously variable transmission 28 in the vehicle width direction.

The front end in a vehicle longitudinal direction of a support arm 39 is fastened to the crankcase 22 of the engine body 23. A first bearing 41 is supported by the support arm 39, the first bearing 41 being connected to one end of the axle 14 at the inner ring. The first bearing 41 connects the axle 14 to the support arm 39 in a rotatable manner. The first bearing 41 is configured with a ball bearing for example. Between the first bearing 41 and the wheel hub 35, a spacer 42 is furnished on the axle 14. Between the wheel hub 35 and the support arm 39, the spacer 42 forms a disposal space for a brake disk 43.

At an end surface of the wheel hub 35, an annular protruding portion 44 that is coaxial with the axle 14 is arranged integrally. The brake disk 43 is fastened to the annular protruding portion 44 by a plurality of bolts 45. According to the present embodiment, a drum brake 46 for parking is disposed between the support arm 39 and the wheel hub 35. The drum brake 46 includes a brake drum 47 that is fixed to the spacer 42. However, this drum brake 46 may be omitted.

The transmission case 19 includes a case main body 48, a cover member 51, and a gear cover 53, the case main body 48 continuing from the crankcase 22 and extending rearward on the lateral side of the rear wheel WR, the cover member 51 being joined to the case main body 48 and forming, between the cover member 51 and the outward surface of the case main body 48, a belt-type continuously variable transmission chamber 49 that stores the belt-type continuously variable transmission 28, the gear cover 53 being joined to the case main body 48, extending along the outer shape of the rear wheel WR, and forming, between the gear cover 53 and the inward surface of the case main body 48, a mechanical transmission chamber 52 that stores the mechanical transmission 32.

The gear cover 53 includes a second bearing housing 55 of a bottomed cylindrical body, a third bearing housing 57 of a bottomed cylindrical body, and a fourth bearing housing 59 of a through cylindrical body, the second bearing housing 55 supporting a second bearing 54 that is joined to one end of the transmission shaft 27 at the inner ring, the third bearing housing 57 supporting a third bearing 56 that is joined to one end of the intermediate shaft 31 at the inner ring, the fourth bearing housing 59 supporting a fourth bearing 58 that is joined to an intermediate position of the axle 14 at the inner ring. The second bearing 54 rotatably connects the transmission shaft 27 to the gear cover 53. The third bearing 56 rotatably connects the intermediate shaft 31 to the gear cover 53. The fourth bearing 58 rotatably connects the axle 14 to the gear cover 53. Here, the second bearing 54, the third bearing 56, and the fourth bearing 58 are configured with ball bearings. Seal members 61, 62 formed in an annular shape are incorporated in the fourth bearing housing 59, the seal members 61, 62 ensuring liquid-tightness between the fourth bearing housing 59 and the axle 14. A storage space of the fourth bearing 58 is partitioned between the seal members 61, 62 in the axial direction. In the gear cover 53, a protruding portion 63 is partitioned, the protruding portion 63 protruding toward the inside of the mechanical transmission chamber 52 corresponding to the annular ridge line of the wheel rim 37 of the rear wheel WR. A surface of the protruding portion 63 has a curved shape in the inside of the mechanical transmission chamber 52.

The case main body 48 includes a fifth bearing housing 65 of a through cylindrical body, a sixth bearing housing 67 of a bottomed cylindrical body, and a seventh bearing housing 69 of a bottomed cylindrical body, the fifth bearing housing 65 supporting a fifth bearing 64 that is joined to an intermediate position of the transmission shaft 27 at the inner ring, the sixth bearing housing 67 supporting a sixth bearing 66 that is joined to the other end of the intermediate shaft 31 at the inner ring, the seventh bearing housing 69 supporting a seventh bearing 68 that is joined to one end of the axle 14 at the inner ring. The fifth bearing 64 rotatably connects the transmission shaft 27 to the case main body 48. The sixth bearing 66 rotatably connects the intermediate shaft 31 to the case main body 48. The seventh bearing 68 rotatably connects the axle 14 to the case main body 48. Thus, the transmission shaft 27 is supported at both ends by of the second bearing 54 and the fifth bearing 64. The intermediate shaft 31 is supported at both ends by of the third bearing 56 and the sixth bearing 66. The axle 14 is supported at both ends by of the fourth bearing 58 and the seventh bearing 68. Here, the fifth bearing 64 and the seventh bearing 68 are configured with ball bearings, and the sixth bearing 66 is configured with a needle bearing. A seal member 71 formed in an annular shape is incorporated in the fifth bearing housing 65, the seal member 71 ensuring liquid-tightness between the fifth bearing housing 65 and the transmission shaft 27.

The belt-type continuously variable transmission 28 includes a drive pulley 72, a follower pulley 73, and a V-belt 74 formed in an annular shape, the drive pulley 72 being disposed inside the belt-type continuously variable transmission chamber 49 and being connected to one end of the crankshaft 24, the follower pulley 73 being supported in a relatively rotatable manner by the transmission shaft 27 that has an axis parallel to the crankshaft 24, the V-belt 74 being wound around the drive pulley 72 and the follower pulley 73. The crankshaft 24 protrudes from the crankcase 22, and enters the belt-type continuously variable transmission chamber 49.

The drive pulley 72 includes a fixed pulley half body 75a and a movable pulley half body 75b, the fixed pulley half body 75a being fixed to the crankshaft 24, the movable pulley half body 75b being relatively displaceable in the axial direction with respect to the fixed pulley half body 75a. The movable pulley half body 75b is driven in the axial direction by a centrifugal force applied to a weight roller 77 that is disposed between a ramp plate 76 and the movable pulley half body 75b, the ramp plate 76 being fixed to the crankshaft 24. The V-belt 74 is wound between the fixed pulley half body 75a and the movable pulley half body 75b.

The follower pulley 73 includes an inner cylinder 78 of a cylindrical body, a fixed pulley half body 79a, an outer cylinder 81, and a movable pulley half body 79b, the inner cylinder 78 being furnished to the transmission shaft 27 in a relatively rotatable manner and in a coaxial manner with the transmission shaft 27, the fixed pulley half body 79a being fixed to the inner cylinder 78, the outer cylinder 81 being furnished to the inner cylinder 78 so as to be relatively displaceable in the axial direction and be relatively rotatable with respect to the inner cylinder 78, the movable pulley half body 79b being fixed to the outer cylinder 81 and supported by the inner cylinder 78 so as to be displaceable in the axial direction with respect to the fixed pulley half body 79a. The V-belt 74 is wound between the fixed pulley half body 79a and the movable pulley half body 79b. Between the inner cylinder 78 and the outer cylinder 81, a torque cam mechanism 82 is incorporated, the torque cam mechanism 82 exerting a drive force to the movable pulley half body 79b in the axial direction according to the relative rotational phase difference between the movable pulley half body 79b and the fixed pulley half body 79a. The movable pulley half body 79b is pressed elastically to the fixed pulley half body 79a by a coil spring 83.

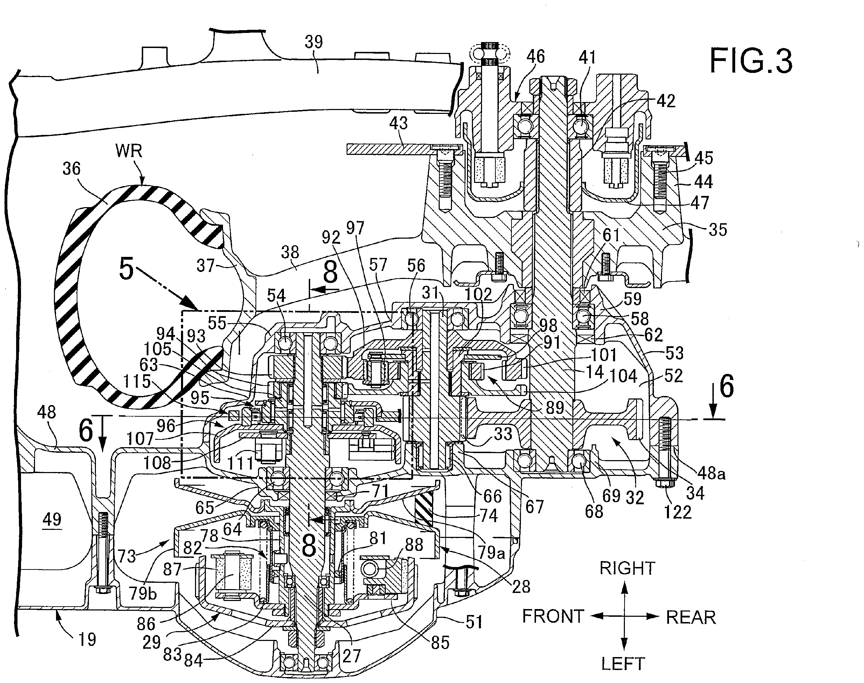

As shown in FIG. 3, the startup clutch 29 includes a clutch outer 84, a clutch inner 85, centrifugal weights 87, and clutch springs 88, the clutch outer 84 being fixed to the transmission shaft 27 and formed into a bowl shape, the clutch inner 85 being fixed to the inner cylinder 78, the centrifugal weights 87 being rotatably supported around shafts 86 at plural positions of the clutch inner 85, the clutch springs 88 being arranged between respective centrifugal weights 87 and the clutch inner 85. When a rotational drive force is transmitted from the belt-type continuously variable transmission 28 and the clutch inner 85 rotates, respective centrifugal weights 87 open to the centrifugal direction resisting the elastic force of the clutch springs 88 by action of the centrifugal force. When the rotational speed of the engine 17 reaches equal to or higher than a predetermined startup rotational speed, the centrifugal force applied to each centrifugal weight 87 surpasses the spring force of the clutch spring 88, the tip ends of the centrifugal weights 87 having opened is in contact with the inner periphery of the clutch outer 84, and frictional connection is established. According to establishment of the friction connection, the inner cylinder 78 namely the fixed pulley half body 79a and the clutch outer 84 namely the transmission shaft 27 are joined to each other.

The mechanical transmission 32 includes a planetary gear mechanism 89, a first power transmission gear 93, a second power transmission gear 94, and a shift clutch 96, the planetary gear mechanism 89 being furnished to the intermediate shaft 31, the first power transmission gear 93 being joined to the transmission shaft 27 in a relatively non-rotatable manner and connected to a ring gear 92 of the planetary gear mechanism 89, the second power transmission gear 94 being furnished to the transmission shaft 27 in a relatively rotatable manner and connected to a sun gear 91 of the planetary gear mechanism 89, the shift clutch 96 being combined to a one-way clutch 95 and switching the gear shift stage between the low-speed stage and the high-speed stage, the one-way clutch 95 being joined to the second power transmission gear 94.

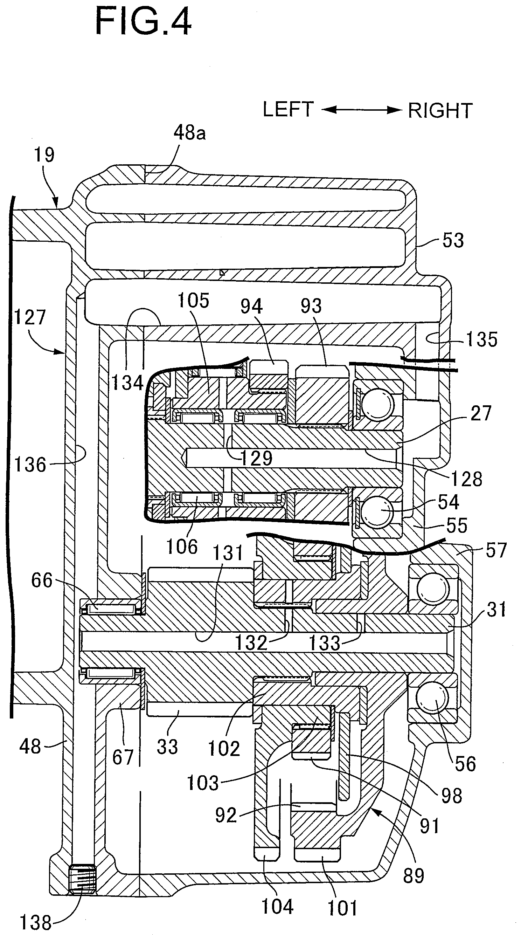

With reference also to FIG. 4, the planetary gear mechanism 89 includes the sun gear 91, the ring gear 92, a plurality of planetary gears 97, and a planetary carrier 98, the sun gear 91 being supported by the intermediate shaft 31 in a relatively rotatable manner and having external teeth that are coaxially and annularly disposed to the intermediate shaft 31, the ring gear 92 being supported by the intermediate shaft 31 in a relatively rotatable manner so as to surround the sun gear 91 and having internal teeth that are coaxially and annularly disposed to the intermediate shaft 31, the planetary gears 97 having rotational axes parallel to the axis of the intermediate shaft 31 and meshing with the external teeth of the sun gear 91 and the internal teeth of the ring gear 92, the planetary carrier 98 being supported by the intermediate shaft 31 in a relatively non-rotatable manner and rotatably supporting the planetary gears 97.

On the outer periphery of the ring gear 92, a third power transmission gear 101 is formed integrally. The third power transmission gear 101 meshes with the first power transmission gear 93. Therefore, rotational power is transmitted from the transmission shaft 27 to the ring gear 92 according to the gear ratio of the first power transmission gear 93 and the third power transmission gear 101.

The planetary carrier 98 includes a boss 102 formed in a cylindrical shape, the boss 102 being furnished to the intermediate shaft 31 in a coaxial manner with the intermediate shaft 31. The boss 102 is joined to the intermediate shaft 31 in a relatively non-rotatable manner by a spline of the inner side. Therefore, the planetary carrier 98 rotates along with the intermediate shaft 31.

The sun gear 91 is coaxially formed to the intermediate shaft 31 and connected to a tubular body 103 that is furnished to the boss 102 of the planetary carrier 98 in a coaxial manner and in a relatively rotatable manner. On the tubular body 103, a fourth power transmission gear 104 is formed integrally, the fourth power transmission gear 104 meshing with the second power transmission gear 94. The sun gear 91 is joined to the tubular body 103 in a relatively non-rotatable manner by a spline for example. Therefore, the fourth power transmission gear 104 and the sun gear 91 rotate integrally. The fourth power transmission gear 104 has the same diameter and the same number of teeth as the third power transmission gear 101.

In such planetary gear mechanism 89, when the transmission shaft 27 rotates according to the rotational power of the engine 17, a rotational force is transmitted from the first power transmission gear 93 to the third power transmission gear 101, and the ring gear 92 rotates around the axis of the intermediate shaft 31 reversely to the rotational direction of the transmission shaft 27. A rotational force is applied to the planetary gears 97 in the same direction as the rotational direction of the ring gear 92. A rotational force is applied to the sun gear 91 in the same direction as the rotational direction of the transmission shaft 27.

At this time, when the shift clutch 96 is in a disconnected state, a clutch outer 107 is supported on the transmission shaft 27 in a relatively rotatable manner. Power is not transmitted to the clutch outer 107 from the transmission shaft 27. Therefore, a rotational force in a direction reverse to the rotational direction of the transmission shaft 27 is applied to the clutch outer 107 from the fourth power transmission gear 104 that rotates integrally with the sun gear 91. Rotation of the clutch outer 107 is hindered by the one-way clutch 95. As a result, the sun gear 91 becomes a stationary state. With respect to the sun gear 91 having stopped, the rotational force of the planetary gear 97 causes rotation of the planetary carrier 98 around the intermediate shaft 31. Thus, a rotational driving force is transmitted to the intermediate shaft 31 from the transmission shaft 27 with a preset reduction ratio. Rotation of the intermediate shaft 31 is transmitted to the axle 14 of the rear wheel WR through the output gear 33 and the driven gear 34. "low-speed stage (LOW)" is established in the mechanical transmission 32.

When the rotational speed of the transmission shaft 27 increases and the shift clutch 96 comes into a connected state, a rotational force is applied to the clutch outer 107 from the transmission shaft 27 through a clutch inner 108 in the same direction as the rotational direction of the transmission shaft 27. At this time, restriction by the one-way clutch 95 is released in the clutch outer 107 of the shift clutch 96. The clutch outer 107 rotates along with the transmission shaft 27. Rotation of the clutch outer 107 causes rotation of the sun gear 91 through the second power transmission gear 94 and the fourth power transmission gear 104. The sun gear 91 rotates in the same direction as the rotational direction of the ring gear 92. In the planetary gear mechanism 89, rotation difference for each gear is cancelled. The planetary carrier 98 rotates around the intermediate shaft 31 at a speed equal to that of the ring gear 92 and the sun gear 91. As a result, "high-speed stage (HIGH)" is established in the mechanical transmission 32. Also, in the mechanical transmission 32, switching of the gear shift stage is effected in a state where the gear ratio in the belt-type continuously variable transmission 28 is low.

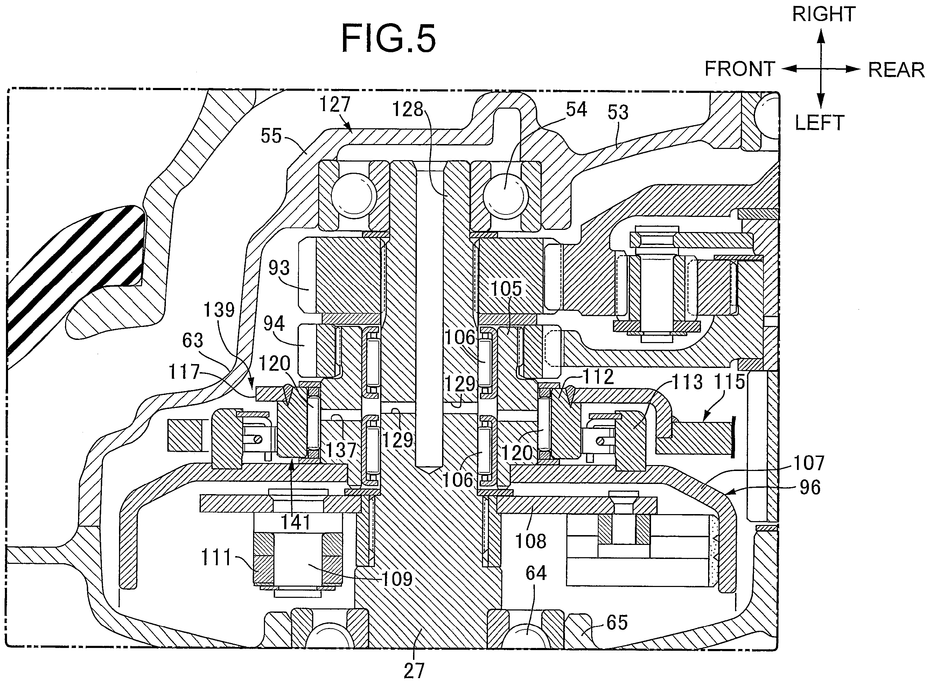

As shown in FIG. 5, the second power transmission gear 94 is furnished to the transmission shaft 27 in a relatively rotatable manner, and includes a cylindrical body 105 that is coaxial with the transmission shaft 27. The cylindrical body 105 is supported by the transmission shaft 27 through an eighth bearing 106 that is a needle bearing. The second power transmission gear 94 has the same diameter (D1=D2) and the same number of teeth as the first power transmission gear 93.

The shift clutch 96 includes the clutch outer 107, the clutch inner 108, centrifugal weights 111, and clutch springs (not illustrated), the clutch outer 107 being supported by the transmission shaft 27 in a relatively rotatable manner and formed into a bowl shape, the clutch inner 108 being connected to the transmission shaft 27 in a relatively non-rotatable manner inside the clutch outer 107, the centrifugal weights 111 being rotatably supported around shafts 109 at plural positions of the clutch inner 108, the clutch springs 88 being arranged between respective centrifugal weights 111 and the clutch inner 108. The clutch outer 107 is joined to the cylindrical body 105 of the second power transmission gear 94 in a relatively non-rotatable manner. Therefore, the second power transmission gear 94 and the clutch outer 107 rotate integrally around the axis of the transmission shaft 27. The first power transmission gear 93, the cylindrical body 105 of the second power transmission gear 94, and the clutch inner 108 are sandwiched between the step of the transmission shaft 27 and the second bearing 54, and restricted in the axial direction of the transmission shaft 27 in a state of not being relatively displaceable.

In this shift clutch 96, when the clutch inner 108 rotates along with the transmission shaft 27, respective centrifugal weights 111 open toward the centrifugal direction resisting the elastic force of the clutch springs by action of the centrifugal force. When the rotational speed of the clutch inner 108 becomes equal to or higher than a predetermined rotational speed, the centrifugal force applied to each centrifugal weight 111 surpasses the spring force of the clutch spring, and the centrifugal weights 111 effect frictional engagement with the inner periphery of the clutch outer 107. According to establishment of the frictional engagement, the clutch outer 107 and the second power transmission gear 94 rotate along with the transmission shaft 27.

Here, the connection rotational speed at which the shift clutch 96 comes from the disconnected state into the connected state is higher than the connection rotational speed at which the startup clutch 29 comes from the disconnected state into the connected state, and the disconnection rotational speed at which the shift clutch 96 comes from the connected state into the disconnected state is also higher than the disconnection rotational speed at which the startup clutch 29 comes from the connected state into the disconnected state.

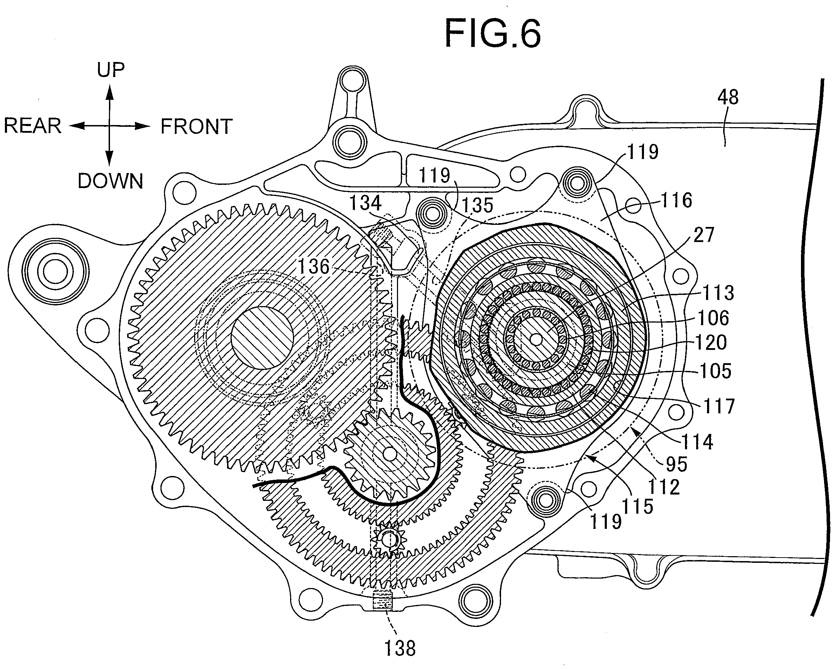

As shown in FIG. 6, the one-way clutch 95 includes an inner ring 112, an outer ring 113, and a plurality of roller cams 114, the inner ring 112 being furnished to the transmission shaft 27 in a coaxial manner with the transmission shaft 27, the outer ring 113 being coaxially disposed to the inner ring 112 and relatively rotating with respect to the inner ring 112, the roller cams 114 being disposed between the inner ring 112 and the outer ring 113. In the roller cam 114, a cam surface is formed. When the outer ring 113 rotates toward the first direction around the axis of the transmission shaft 27 with respect to the inner ring 112, the cam surface establishes the connected state between the inner ring 112 and the outer ring 113 with the roller cams 114 being bitten between the inner ring 112 and the outer ring 113 to prevent relative rotation of the outer ring 113 with respect to the inner ring 112. When the outer ring 113 rotates toward the second direction that is opposite to the first direction around the axis of the transmission shaft 27 with respect to the inner ring 112, the cam surface allows slippage of the outer ring 113, and establishes the disconnected state between the inner ring 112 and the outer ring 113. Here, the inner ring 112 is immovably fixed. Therefore, even if a rotational force is applied to the outer ring 113 in the first direction, the outer ring 113 is restricted with respect to the inner ring 112 according to biting of the roller cams 114, and rotation of the outer ring 113 is prevented. On the other hand, when a rotational force is applied in the second direction, the roller cams 114 are not bitten, and the outer ring 113 runs idle with respect to the inner ring 112.

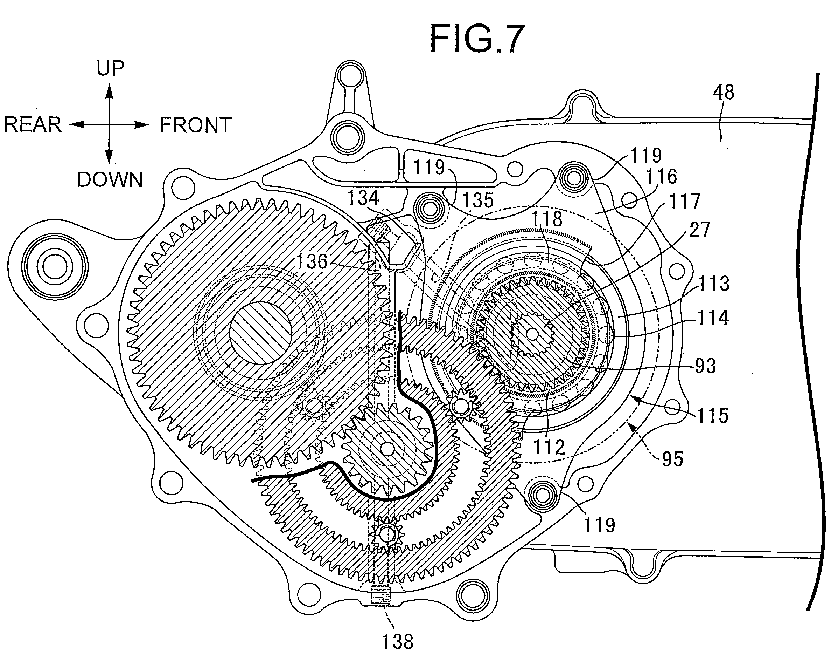

As shown in FIG. 7, the inner ring 112 is fixed to the case main body 48 of the transmission case 19 by a fixing tool 115. The fixing tool 115 includes a support body 116 and a cover 118, the support body 116 being formed into an annular plate shape surrounding the outer periphery of the outer ring 113, the cover 118 being joined to the support body 116 and the inner ring 112 so as to fix the inner ring 112 to the support body 116, including a cutout portion 117, and covering the roller cams 114 and the outer ring 113, a part of the outer ring 113 facing the cutout portion 117 over a predetermined central angle. In the support body 116, three attaching arm portions 119 are formed, the attaching arm portions 119 expanding outward. The attaching arm portions 119 are laid over the case main body 48. The cover 118 is formed into an annular shape surrounding the inner ring 112 and welded to the inner ring 112 over the entire periphery of the inner ring 112. The outer periphery of the cover 118 is welded and fixed to the support body 116 excepting the cutout portion 117. As viewed along the axial direction of the outer ring 113 and the inner ring 112, the cutout portion 117 has an arc shape that has the center of curvature at an axis 27a of the transmission shaft 27, by reflecting the shape of the protruding portion 63.

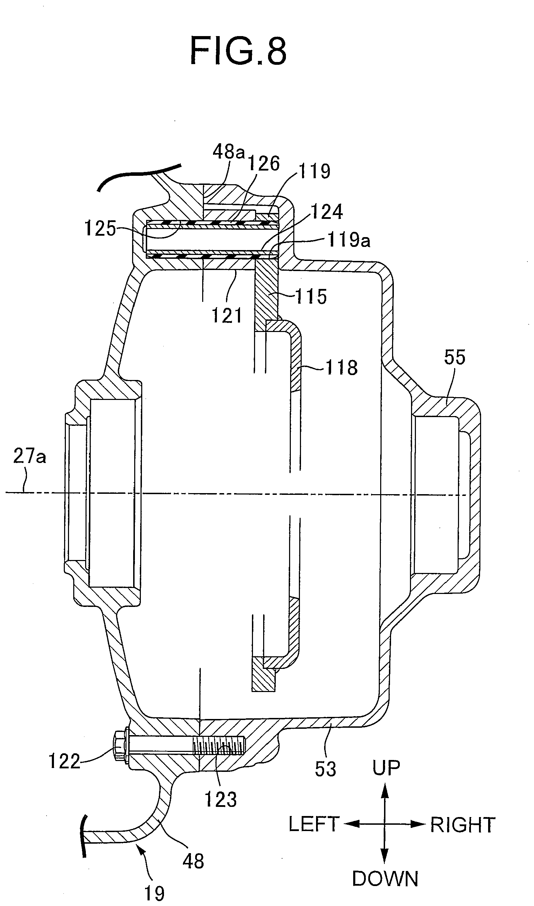

As shown in FIG. 8, a collar 121 and the attaching arm portions 119 of the fixing tool 115 are laid in this order over a mating surface 48a of the case main body 48. The mating surface 48a is orthogonal to the axis 27a of the transmission shaft 27. The gear cover 53 is joined to the mating surface 48a of the case main body 48. In joining, a plurality of bolts 122 are used. The bolts 122 penetrate the case main body 48, and are screwed into screw holes 123 of the gear cover 53. The attaching arm portions 119 and the collar 121 are sandwiched between the gear cover 53 and the case main body 48. The bolts 122 and the screw holes 123 have axes parallel to the axis 27a of the transmission shaft 27. Thus, the fixing tool 115 is fixed in the axial direction of the transmission shaft 27.

Support tubes 124 formed in a cylindrical shape are fitted into the mating surface 48a of the case main body 48. In the mating surface 48a, bottomed holes 125 are defined, the bottomed holes 125 receiving the support tubes 124. The bottomed hole 125 defines a cylindrical space that has an axis orthogonal to the mating surface 48a. A rubber 126 is baked to be attached to the outer peripheral surface of the support tube 124 over the entire region. The support tubes 124 penetrate the collar 121, and are fitted to support holes 119a of the attaching arm portions 119. Thus, the fixing tool 115 is immovably supported around the axis 27a of the transmission shaft 27.

With reference to FIG. 5, the inner ring 112 of the one-way clutch 95 is supported by the cylindrical body 105 of the second power transmission gear 94 in a relatively rotatable manner through a ninth bearing 120 that is a needle bearing. The outer ring 113 of the one-way clutch 95 is fixed to the clutch outer 107. Therefore, the outer ring 113 rotates integrally with the clutch outer 107. In the one-way clutch 95, when a rotational force is applied to the clutch outer 107 in the direction opposite to the rotational direction of the transmission shaft 27, the roller cams 114 are bitten between the inner ring 112 and the outer ring 113, and the connected state is established between the fixing tool 115 and the clutch outer 107. According to biting of the roller cams 114, the outer ring 113 is restricted with respect to the inner ring 112, and rotation of the outer ring 113 is controlled. When a rotational force is applied to the clutch outer 107 in the same direction as the rotational direction of the transmission shaft 27, the roller cams 114 allow slippage of the outer ring 113, and the disconnected state is established between the fixing tool 115 and the clutch outer 107. Biting of the roller cams 114 does not occur, and the clutch outer 107 runs idle with respect to the fixing tool 115. Rotation of the clutch outer 107 is allowed.

With reference to FIG. 4 to FIG. 6, in the mechanical transmission 32, an oil supply mechanism 127 is incorporated, the oil supply mechanism 127 supplying oil as a lubricating oil to movable bodies. The oil supply mechanism 127 includes a first oil passage 128, a second oil passage 129, a third oil passage 131, a fourth oil passage 132, a fifth oil passage 133, an oil receiver 134 formed in a gutter-shape, a first oil supply passage 135, and a second oil supply passage 136, the first oil passage 128 being formed in the transmission shaft 27 and extending in the axial direction from the end surface on the second bearing 54 side, the second oil passage 129 extending from the first oil passage 128 in the radial direction of the transmission shaft 27 and opening to the outer peripheral surface of the transmission shaft 27 toward the eighth bearing 106, the third oil passage 131 being formed in the intermediate shaft 31 and penetrating the intermediate shaft 31 in the axial direction from the end surface on the sixth bearing 66 side to the end surface on the third bearing 56 side, the fourth oil passage 132 extending from the third oil passage 131 in the radial direction of the intermediate shaft 31 and opening to the outer peripheral surface of the intermediate shaft 31 in a sliding region between the boss 102 and the tubular body 103, the fifth oil passage 133 extending from the third oil passage 131 in the radial direction of the intermediate shaft 31 and opening to the outer peripheral surface of the intermediate shaft 31 in a sliding region between the intermediate shaft 31 and the ring gear 92, the oil receiver 134 being formed in the case main body 48 and the gear cover 53 above the transmission shaft 27 and the intermediate shaft 31 and receiving the oil scraped up by the first to fourth power transmission gears 93, 94, 101, 104, the first oil supply passage 135 being formed in the gear cover 53, extending from the oil receiver 134 downward in the gravitational direction, and being connected to the first oil passage 128 in the second bearing housing 55, the second oil supply passage 136 being formed in the case main body 48, extending from the oil receiver 134 downward in the gravitational direction, and being connected to the third oil passage 131 in the sixth bearing housing 67. In the cylindrical body 105 of the second power transmission gear 94, a sixth oil passage 137 is defined, the sixth oil passage 137 penetrating in the radial direction and opening to the inner peripheral surface and the outer peripheral surface of the cylindrical body 105.

Inside the mechanical transmission chamber 52, oil accumulates at the bottom by action of the gravity. The oil having accumulated is agitated by the first and second power transmission gears 93, 94 on the rotating transmission shaft 27 and the third and fourth power transmission gears 101, 104 on the rotating intermediate shaft 31, and splatters inside the mechanical transmission chamber 52. The splattering oil is collected by the oil receiver 134, and is supplied to the eighth bearing 106 through the first oil supply passage 135, the first oil passage 128, and the second oil passage 129. The oil having lubricated the eighth bearing 106 is supplied to the ninth bearing 120 further going through the sixth oil passage 137. In a similar manner, the oil having been collected is supplied to the sliding region between the boss 102 and the tubular body 103 through the second oil supply passage 136, the third oil passage 131, and the fourth oil passage 132, and is supplied to the sliding region of the ring gear 92 through the second oil supply passage 136, the third oil passage 131, and the fifth oil passage 133.

Here, the second oil supply passage 136 passes through the sixth bearing housing 67 from the oil receiver 134, extends in the up-down direction, and opens to the outer surface of the case main body 48. Such second oil supply passage 136 can be formed by drilling from the outer surface of the case main body 48. The lower end opening of the second oil supply passage 136 is closed by a plug member 138 that is screwed into the case main body 48.

As shown in FIG. 5, the cutout portion 117 of the fixing tool 115 is formed along the protruding portion 63 of the gear cover 53. The cutout portion 117 makes a part of the outer ring 113 of the one-way clutch 95 face the inner wall surface of the protruding portion 63. Here, a first gap 139 is formed between the fixing tool 115 and the gear cover 53, the first gap 139 being connected to the cutout portion 117. By rotation of the one-way clutch 95, the oil splattering from the outer ring 113 passes through the cutout portion 117 and the first gap 139, and is discharged to the gear cover 53 side. The oil discharge structure is configured with the cutout portion 117 and the first gap 139.

A second gap 141 is formed between the clutch outer 107 and the inner ring 112. The second gap 141 connects a space on the inner side and a space on the outer side of the inner ring 112 to each other. Therefore, the oil having lubricated the ninth bearing 120 flows out from the second gap 141 toward the first gap 139 according to the centrifugal force of the clutch outer 107.

Next, the operation of this embodiment will be explained. The oil discharge structure of the one-way clutch 95 includes the fixing tool 115 that is fixed to the transmission case 19, the transmission case 19 storing the one-way clutch 95 in the inside, the fixing tool 115 includes the cutout portion 117 that is formed along the protruding portion 63 of the transmission case 19, the first gap 139 is formed between the cutout portion 117 and the protruding portion 63, and the oil flowing out by rotation of the outer ring 113 of the one-way clutch 95 passes through the cutout portion 117 and the first gap 139, and is discharged to the gear cover 53 side. Since the protruding portion 63 is arranged close to the cutout portion 117, the oil vigorously discharged from the cutout portion 117 is received by the protruding portion 63, and is suppressed from splattering to the periphery. Since splattering is reduced, occurrence of air entrainment is suppressed. Even if the fixing tool 115 comes close to the protruding portion 63, interference between the fixing tool 115 and the protruding portion 63 is avoided by action of the cutout portion 117, and therefore the fixing tool 115 can be efficiently stored in an internal space of the transmission case 19. Therefore, it can contribute to compactization of the transmission case 19.

As described above, since the protruding portion 63 has an arc shape as viewed along the axial direction of the transmission shaft 27, the protruding portion 63 can receive the oil that has been vigorously discharged in any radial direction. Furthermore, since the protruding portion 63 has a curved shape, the oil having been vigorously discharged can be received without splattering.

The one-way clutch 95 is configured with the outer ring 113 and the inner ring 112, the outer ring 113 being rotatable, rotation of the inner ring 112 being restricted, and the fixing tool 115 fixes the inner ring 112 while covering at least a part of the outer ring 113. Since a part of the rotating outer ring 113 is covered with the fixing tool 115, the oil can be prevented from splattering.

According to this oil discharge structure, there exists the second gap 141 between the clutch outer 107 and the inner ring 112, the clutch outer 107 rotating integrally with the outer ring 113, and the oil supplied from the inner side of the inner ring 112 is discharged through the second gap 141. Therefore, the oil supplied from the inner side of the inner ring 112 can be also discharged since the oil passes through the second gap 141.

As described above, the power transmission device 21 includes the inner ring 112, the outer ring 113, the support body 116, and the cover 118, the outer ring 113 being coaxially disposed to the inner ring 112 and relatively rotating with respect to the inner ring 112, the support body 116 being fixed to the transmission case 19 and surrounding the outer periphery of the outer ring 113, the transmission case 19 storing the inner ring 112 and the out ring 113, the cover 118 being joined to the support body 116 and the inner ring 112 so as to fix the inner ring 112 to the support body 116, including the cutout portion 117 that makes a part of the outer ring 113 face the inner wall surface of the transmission case 19, and covering the side surface of the inner ring 112 and the outer ring 113. At this time, the first gap 139 is formed between the cover 118 and the inner wall surface of the transmission case 19, the first gap 139 being connected to the cutout portion 117.

While the outer ring 113 rotates, the oil splattering outward in the radial direction from the outer ring 113 is vigorously discharged outward from the cutout portion 117. The oil having discharged from the cutout portion 117 hits and is received by the inner surface wall of the transmission case 19. The oil flows along the inner surface wall of the transmission case 19 from the first gap 139, and is collected efficiently. Since splattering of the oil is reduced, occurrence of air entrainment is suppressed. Also, the transmission case 19 can come close to the outer ring 113 as much as possible by action of the cutout portion 117. Therefore, it can contribute to compactization of the transmission case 19.

The embodiment of the present invention has been explained above. However, the present invention is not limited to the embodiment described above, and various design changes can be effected without departing from the gist of the present invention.
To provide an oil discharge structure of a rotational body capable of effectively suppressing occurrence of air entrainment.
The oil discharge structure of a rotational body 95 includes a fixing tool 115 that is fixed to an external case 53, the external case 53 storing the rotational body 95 in an inside thereof in a rotatable manner. The fixing tool 115 includes a cutout portion 117 that is formed along a protruding portion 63 of the external case 53, a first gap 139 is formed between the cutout portion 117 and the protruding portion 63, and oil flowing out by rotation of the rotational body 95 passes through the cutout portion 117 and the first gap 139 so as to be discharged to the external case 53 side

### [DESCRIPTION OF REFERENCE NUMERALS AND SYMBOLS]

- 19: External case (transmission case)
- 63: Protruding portion
- 95: Rotational body (one-way clutch)
- 107: Rotational portion (clutch outer)
- 112: Inner ring
- 113: Outer ring
- 115: Fixing tool
- 117: Cutout portion
- 139: First gap
- 141: Second gap

## Claims

1. An external case comprising a gear cover (53) and equipped with a rotational body (95) and an oil discharge structure (117, 13) therein,
wherein a protruding portion (63) is formed in the external case (19),
the rotational body (95) is provided inside the external case (19) in a rotatable manner, and
a fixing tool (115) is fixed to the external case (19),
**characterized in that** the fixing tool (115) includes a cutout portion (117) that is formed along a the protruding portion (63) of the external case (19),
the oil discharge structure comprises the cutout portion (117) and a first gap (139) which is formed between the cutout portion (117) and the protruding portion (63), and
the oil discharge structure permits oil flowing out by rotation of the rotational body (95) to pass through the cutout portion (117) and the first gap (139) so as to be discharged to the gear cover (53) side.

2. The external case according to claim 1, wherein the protruding portion (63) has an arc shape as viewed in an axial direction of the rotational body (95).

3. The external case according to claim 1 or 2, wherein the protruding portion (63) has a surface of a curved shape.

4. The external case according to any one of claims 1 to 3,
wherein the rotational body (95) is configured with an outer ring (113) and an inner ring (112), the outer ring (113) being rotatable, rotation of the inner ring (112) being restricted, and
the fixing tool (115) fixes the inner ring (112) while covering at least a part of the outer ring (113).

5. The external case according to claim 4,
wherein a second gap (141) exists between a rotational portion (107) and the inner ring (112), the rotational portion (107) rotating integrally with the outer ring (113), and
oil supplied from an inner side of the inner ring (112) is discharged through the second gap (141).

## Patentansprüche

1. Außengehäuse, das eine Getriebeabdeckung (53) aufweist und mit einem Rotationskörper (95) und einer Ölausgabestruktur (177, 13) darin ausgestattet ist,
wobei ein vorstehender Abschnitt (63) in dem Außengehäuse (19) ausgebildet ist,
der Rotationskörper (95) innerhalb des Außengehäuses (19) drehbar vorgesehen ist, und eine Fixiervorrichtung (115) an dem Außengehäuse (19) fixiert ist,
**dadurch gekennzeichnet, dass** die Fixiervorrichtung (115) einen Ausschnittabschnitt (117) enthält, der entlang dem vorstehenden Abschnitt (63) des Außengehäuses (19) ausgebildet ist,
wobei die Ölausgabestruktur den Ausschnittabschnitt (117) und eine erste Lücke (139) aufweist, die zwischen dem Ausschnittabschnitt (117) und dem vorstehenden Abschnitt (63) ausgebildet ist, und
die Ölausgabestruktur erlaubt, dass durch Drehung des Rotationskörpers (95) hinausfließendes Öl durch den Ausschnittabschnitt (117) und die erste Lücke (139) tritt, so dass es zur Getriebeabdeckung (53)-Seite abgegeben wird.

2. Das Außengehäuse nach Anspruch 1, wobei der vorstehende Abschnitt (63), bei Betrachtung in axialer Richtung des Rotationskörpers (95), eine Bogenform hat.

3. Das Außengehäuse nach Anspruch 1 oder 2, wobei der vorstehende Abschnitt (63) eine gekrümmte Oberflächenform hat.

4. Das Außengehäuse nach einem der Ansprüche 1 bis 3, wobei der Rotationskörper (95) mit einem Außenring (113) und einem Innenring (112) konfiguriert ist, der Außenring (113) drehbar ist, eine Drehung des Innenrings (112) eingeschränkt ist und die Fixiervorrichtung (115) den Innenring (112) fixiert, während zumindest ein Teil des Außenrings (113) abgedeckt wird.

5. Das Außengehäuse nach Anspruch 4, wobei sich eine zweite Lücke (141) zwischen einem Rotationsabschnitt (107) und dem Innenring (112) befindet, der Rotationsabschnitt (107) sich integriert mit dem Außenring (113) dreht, und von einer Innenseite des Innenrings (112) zugeführtes Öl durch die zweite Lücke (141) abgegeben wird.

## Revendications

1. Carter externe comprenant un couvercle d'engrenage (53) et étant équipé avec un corps rotatif (95) et une structure d'évacuation d'huile (117, 13) à l'intérieur de ce dernier,
dans lequel une partie en saillie (63) est formée dans le carter externe (19),
le corps rotatif (95) est prévu à l'intérieur du carter externe (19) d'une manière rotative, et
un outil de fixation (115) est fixé sur le carter externe (19),
**caractérisé en ce que** l'outil de fixation (115) comprend une partie découpée (117) qui est formée le long de la partie en saillie (63) du carter externe (19),
la structure de décharge d'huile comprend la partie découpée (117) et un premier espace (139) qui est formé entre la partie découpée (117) et la partie en saillie (63), et
la structure d'évacuation d'huile permet à l'huile de sortir par la rotation du corps rotatif (95) afin de passer à travers la partie découpée (117) et le premier espace (139) pour être évacuée du côté du couvercle d'engrenage (53).

2. Carter externe selon la revendication 1, dans lequel la partie en saillie (63) a une forme d'arc, lorsqu'elle est observée dans une direction axiale du corps rotatif (95).

3. Carter externe selon la revendication 1 ou 2, dans lequel la partie en saillie (63) a une surface d'une forme incurvée.

4. Carter externe selon l'une quelconque des revendications 1 à 3,
dans lequel le corps rotatif (95) est configuré avec une bague externe (113) et une bague interne (112), la bague externe (113) pouvant tourner, la rotation de la bague interne (112) étant limitée, et
l'outil de fixation (115) fixe la bague interne (112) tout en recouvrant au moins une partie de la bague externe (113).

5. Carter externe selon la revendication 4,
dans lequel un second espace (141) existe entre une partie rotative (107) et la bague interne (112), la partie rotative (107) tournant de manière solidaire avec la bague externe (113), et
l'huile amenée par un côté interne de la bague interne (112) est évacuée par le second espace (141).
